# EUROPEAN PATENT APPLICATION

(11) **EP 1 952 730 A1**
(43) Date of publication of application: **06.08.2008**
(21) Application number: 07250446.7
(22) Date of filing: 02.02.2007
(51) Int. Cl.: A47F 1/06, A47F 3/00, G07F 9/02, G07F 9/10, G07F 11/60

(54) **Packaged tobacco product storage system**

(71) Applicant: Philip Morris Products S.A., 2000 Neuchâtel (CH)
(72) Inventor: The designation of the inventor has not yet been filed
(74) Representative: Millburn, Julie Elizabeth

(57) **Abstract**

A packaged tobacco product storage system comprises: a refillable container (2) having a storage compartment (4) for retaining at least two separate arrays (6) of packaged tobacco products (8), the storage compartment (4) being openable to allow access to at least one packaged tobacco product (8) in each of the at least two arrays (6) and closable to prevent access to the at least two arrays (6) of packaged tobacco products (8); and climate control means operable to maintain prescribed humidity conditions within the storage compartment (4).

## Description

The present invention relates to a packaged tobacco product storage system.

Retail storage systems for storing, displaying and vending packs of cigarettes are known in the art. Due to the loss of moisture from the tobacco therein, cigarettes housed in such storage systems can, however, lose their freshness over time. It would be desirable, therefore, to provide an improved storage system for packs of cigarettes and other packaged tobacco products that helps maintain the freshness of the packaged tobacco products during storage. It would further be desirable to provide a personal storage system that allows a consumer to satisfactorily store a customised selection of packaged tobacco products at home.

According to the present invention there is provided a packaged tobacco product storage system comprising: a refillable container having a storage compartment for retaining at least two separate arrays of packaged tobacco products, the storage compartment being openable to allow access to at least one packaged tobacco product in each of the at least two arrays and closable to prevent access to the at least two arrays of packaged tobacco products; and climate control means operable to maintain prescribed humidity conditions within the storage compartment.

By regulating the humidity within the storage compartment of the refillable container, the packaged tobacco product storage system of the present invention advantageously avoids deterioration in the freshness and quality of packaged tobacco products stored therein. Packaged tobacco product storage systems according to the present invention thereby advantageously enable a consumer to store a tailored or customised selection of packaged tobacco products under optimal conditions at home or another non-retail location. Packaged tobacco product storage systems according to the present invention may, however, also be advantageously employed to store packs of cigarettes and other packaged tobacco products at retail locations, such as, for example, cigarette kiosks, brand stores and duty free shops, or at commercial points of distribution such as, for example, hospitality lounges and promotional stands.

Throughout the specification packaged tobacco product storage systems according to the invention that are designed for private, non-commercial use are referred to as "personal packaged tobacco product storage systems" and packaged tobacco product storage systems according to the invention that are designed for retail or other commercial use are referred to as "commercial packaged tobacco product storage systems".

Packaged tobacco products that may be retained in the storage compartment of the refillable container of packaged tobacco product storage systems according to the present invention include, but are not limited to, packaged conventional lit-end cigarettes (e.g. hinge-lid packs, slide and shell packs, wing packs or soft packs of lit-end cigarettes), packaged cigarettes for use with electrical smoking systems (e.g. packaged cigarettes of the type disclosed in US-A-5 692 525), packaged loose tobacco for the manufacture of roll your own (RYO) and make your own (MYO) cigarettes (e.g. pouches or tins of loose tobacco or boxes of loose tobacco of the type disclosed in WO-A-2007/007197), packaged pipe tobacco (e.g. pouches or tins or pipe tobacco), packaged smokeless tobacco products (e.g. packaged chewing tobacco, packaged dipping tobacco, packaged snus or packaged snuff) or combinations thereof.

In a preferred embodiment of the present invention, the packaged tobacco product storage system comprises a refillable container having a storage compartment for retaining at least two separate arrays of packaged bundles of cigarettes for use as refills or cartridges for cigarette cases and other cigarette dispensers.

The climate control means may include an electronically controlled humidity regulator, a chemically controlled humidity regulator or a combination thereof. Preferably, the climate control means is operable to maintain different prescribed humidity conditions in the storage compartment of the refillable container depending upon the type or types of packaged tobacco products retained therein.

Preferably, the climate control means is operable to maintain a relative humidity of between about 58% and about 70% within the storage compartment. More preferably, the climate control means is operable to maintain a relative humidity of between about 58% and about 62% within the storage compartment. Most preferably, the climate control means is operable to maintain a relative humidity of about 60% within the storage compartment.

The climate control means may also be operable to maintain prescribed temperature conditions within the storage compartment. The climate control means may, for example, include, one or more thermostatically controlled heating devices, one or more thermostatically controlled cooling devices or one or more thermostatically controlled heating and cooling devices or any other suitable known device for regulating the temperature within the storage compartment. Preferably, where the climate means is operable to maintain prescribed temperature conditions within the storage compartment, it is operable to maintain a temperature of between about 20°C and about 22°C.

It will be appreciated that, through an appropriate choice of the dimensions of the storage compartment of the refillable container, packaged tobacco product storage systems according to the present invention may be designed to store different numbers of packaged tobacco products. Personal packaged tobacco product storage systems according to the present invention may, for example, comprise a refillable container having a storage compartment for retaining a total of twenty wrapped bundles of cigarettes, in at least two separate arrays, for use as refills or cartridges for cigarette cases and other cigarette dispensers. Personal packaged tobacco product storage systems according to the present invention preferably comprise a refillable container having a storage compartment for retaining a total of between about twenty packaged tobacco products and about fifty packaged tobacco products. Commercial packaged tobacco product storage systems according to the invention may comprise a refillable container having a storage compartment for retaining a greater total number of packaged tobacco products.

Preferably, the storage compartment of the refillable container is divided by one or more partitions into at least two sections, each for retaining a separate array of packaged tobacco products. For example, one or more horizontal partitions (e.g. one or more shelves or trays), one or more vertical partitions (e.g. one or more walls or posts) or a combination thereof may be provided in the storage compartment, which divide the interior of the storage compartment into at least two sections, each for retaining a separate array of packaged tobacco products. Preferably, the at least two sections are in fluid communication with one another.

Preferably, the storage compartment is divided by one or more movable partitions into at least two adjustable sections, each for retaining a separate array of packaged tobacco products. In use, by moving the one or more partitions the dimensions of the at least two sections may be advantageously adjusted in order to accommodate, for example, different numbers of packaged tobacco products or packaged tobacco products of different size or shape.

The refillable container of packaged tobacco product storage systems according to the present invention may have a storage compartment for retaining at least two separate rows or columns of packaged tobacco products. For example, the storage compartment of the refillable container may be divided by one or more partitions into at least two sections, each for retaining a separate vertically stacked column of packaged tobacco products. Alternatively, the storage compartment may be divided by one or more partitions into at least two sections, each for retaining a separate horizontal row of packaged tobacco products.

A preferred personal packaged tobacco product storage system according to the present invention comprises a refillable container having a storage compartment divided by one or more partitions into at least two sections, each for retaining a separate vertically stacked column of wrapped bundles of cigarettes for use as refills or cartridges for cigarette cases and other cigarette dispensers. A particularly preferred personal packaged tobacco product storage system according to the present invention comprises a refillable container having a storage compartment divided by one or more partitions into five sections, each for retaining a separate vertically stacked column of between four and eight, preferably between six and eight, wrapped bundles of cigarettes for use as refills or cartridges for cigarette cases and other cigarette dispensers.

Packaged tobacco product storage systems according to the present invention may advantageously comprise refillable containers comprising storage compartments for retaining at least two separate arrays of packaged tobacco products of different types.

A wide variety of different types of cigarettes are produced and sold. For example, different types of tobacco having unique characteristic flavours and aromas, such as Burley, Oriental and Virginia tobacco, are used alone or in varying amounts in tobacco blends to produce brands of cigarettes having different characteristic flavours. In addition, both plain cigarettes and cigarettes having many different types of filter tips are manufactured as well as cigarettes of differing length (e.g. regular size, king size or super-king size), circumference (e.g. slim or super-slim), strength of flavour, total particulate matter delivery and nicotine delivery. Furthermore, cigarettes containing flavourings such as menthol are also available.

Packaged tobacco product storage systems according to the invention may comprise refillable containers comprising storage compartments for retaining at least two separate arrays of wrapped bundles of cigarettes, each array comprising wrapped bundles of cigarettes of a different tobacco blend or different flavour. Alternatively, or in addition, packaged tobacco product storage systems according to the invention may comprise refillable containers comprising storage compartments that are adapted to store at least two separate arrays of wrapped bundles of cigarettes, each array comprising wrapped bundles of cigarettes of a different size (different length, different circumference or both different length and different circumference).

For example, personal packaged tobacco product storage systems according to the invention may advantageously comprise refillable containers comprising storage compartments for retaining at least two separate rows or columns of wrapped bundles of cigarettes for use as refills or cartridges for cigarette cases and other cigarette dispensers, each row or column comprising wrapped bundles of cigarettes of a different tobacco blend or different flavour in accordance with an individual consumer's particular tastes and requirements.

For example, packaged tobacco product storage systems according to the invention may comprise refillable containers having storage compartments for retaining:
one or more rows or columns of wrapped bundles of higher tar cigarettes, together with one or more rows or columns of wrapped bundles of lower tar cigarettes (*i.e.* different deliveries);
one or more rows or columns of wrapped bundles of non-mentholated cigarettes, together with one or more rows or columns of wrapped bundles of menthol cigarettes (*i.e*. different flavours);
one or more rows or columns of wrapped bundles of king size (about 84mm in length) cigarettes, together with one or more rows or columns of wrapped bundles of shorter (between about 70mm and about 72mm in length) cigarettes (*i.e*. different lengths);
one or more rows or columns of wrapped bundles of king size cigarettes, together with one or more rows or columns of pre- wrapped bundles of slim cigarettes of the same length (*i.e.* different circumference);
one or more rows or columns of wrapped bundles of king size cigarettes, together with one or more rows or columns of wrapped bundles of wider, shorter cigarettes of a different flavour (*i.e.* different circumference, different length and different flavour);
or any combination thereof.

It will be appreciated that the specific examples given above are for the purposes of illustration only and that packaged tobacco product storage systems according to the invention may be used to store other desired combinations of different cigarette types as well as desired combinations of other packaged tobacco .products.

Packaged tobacco product storage systems according to the present invention may comprise refillable containers having storage compartments for retaining at least two separate arrays of packages containing different numbers of tobacco products (e.g. wrapped bundles of ten cigarettes or twenty cigarettes) as well as differently shaped packages of tobacco products (e.g. wrapped bundles of cigarettes of rectangular, square, oval, round or triangular cross-section).

For example, packaged tobacco product storage systems according to the present invention may comprise refillable containers having storage compartments divided by one or more partitions into at least two sections, each for retaining a separate array of wrapped bundles of a different number of cigarettes. In an embodiment of the present invention, the storage compartment of the refillable container may be divided by one or more partitions into at least one section for retaining a separate array of wrapped bundles of thirteen cigarettes and at least one section for retaining a separate array of wrapped bundles of seven cigarettes.

Preferably, the packaged tobacco product storage system further comprises access control means operable to prevent unauthorized access to packaged tobacco products retained in the storage compartment. Suitable access control means that may be included in packaged tobacco product storage systems according to the present invention include, but are not limited to, mechanical locks (e.g. key and combination), electronic key card locks (e.g. mechanical holecard, bar code, magnetic stripe and smart card), electronic combination locks, biometric locks (e.g. fingerprint or retina recognition devices) and voice-activated locks.

The storage compartment of the refillable container of the packaged tobacco product storage system may be provided with, for example, a hinged lid, a sliding lid or other similar known opening and closing device that is openable to allow access to at least one packaged tobacco product in each of the at least two arrays and closable to prevent access to the at least two arrays of packaged tobacco products.

Alternatively, the storage compartment may be mounted in the refillable container for movement between a closed position within the refillable container and an open position in which at least a portion of the storage compartment projects outwardly from the remainder of the refillable container. For example, in embodiments of the present invention the storage compartment may be a drawer mounted in the refillable container for horizontal movement between a closed position within the refillable container and an open position in which at least a portion of the storage compartment projects laterally outwards from a side of the refillable container. In a preferred embodiment of the invention, the storage compartment is mounted in the refillable container for vertical movement between a closed position within the refillable container and an open position in which at least a portion of the storage compartment projects upwardly from the top of the refillable container.

Preferably, the storage compartment is openable to allow access to only a limited number of packaged tobacco products in each of the at least two arrays. For example, where the storage compartment of the refillable container is divided by one or more partitions into at least two sections, each for retaining a separate vertically stacked column or a separate horizontal row of packaged tobacco products, the storage compartment may be openable to allow access to only an endmost or two endmost packaged tobacco products in each column or row.

Preferably, the storage compartment is closeable so as to be substantially airtight to enable prescribed humidity conditions to be maintained within the storage compartment by the climate control means.

The storage compartment may be manually or automatically openable to allow access to at least one packaged tobacco product in each of the at least two arrays and manually or automatically closeable to prevent access to the at least two arrays of packaged tobacco products.

Preferably, the packaged tobacco product storage system further comprises a drive unit operable to automatically open the storage compartment. The drive unit may also be operable to automatically close the storage compartment. The drive unit may be mechanically, pneumatically or electrically driven or a combination thereof.

Preferably, the drive unit is operable to automatically move the storage compartment from a closed position within the refillable container and an open position in which at least a portion of the storage compartment projects outwardly from the remainder of the refillable container. More preferably, the drive unit is operable to automatically raise or lift the storage compartment from a closed position within the refillable container and an open position in which at least a portion of the storage compartment projects upwardly from the top of the refillable container.

The drive unit may be electrically or mechanically actuated to automatically open, close or open and close the storage compartment. For example, the drive unit may be actuated by the application of mechanical force or pressure to the storage compartment, by the pressing of one or more push buttons provided on the refillable container, by remote control or by a combination thereof.

Preferably, the drive unit is operable to automatically open the storage compartment in response to a signal from the access control means. For example, where the access control means comprises a fingerprint scanner, the may be operable to automatically raise or lift the storage compartment from a closed position within the refillable container to an open position in which at least a portion of the storage compartment projects upwardly from the top of the remainder of the refillable container in response to an authorisation signal generated by the fingerprint scanner upon successful identification of a consumer's fingerprint.

Preferably, the packaged tobacco product storage system further comprises a consumer interface comprising visual means for communication with a consumer. More preferably, the packaged tobacco product storage system further comprises a consumer interface comprising audio-visual means for communication with a consumer. Preferably, the visual means or audio-visual means of the consumer interface includes a display device such as, for example, a liquid crystal display (LCD), a plasma display panel (PDP), a projection device or a cathode ray tube (CRT) display. Preferably, the display device is provided on the exterior of the refillable container.

Preferably, the consumer interface comprises visual means for communication with a consumer and input means adapted to receive data from a consumer. In a particularly preferred embodiment of the invention, the packaged tobacco product storage system comprises a consumer interface comprising a touch screen or touch panel display for communication with, and for receiving data from, a consumer. Alternatively or in addition, the consumer interface may comprise input means comprising a keyboard or keypad. Preferably, the input means of the consumer interface comprises a laser projection device mounted in the refillable container and operable to project the outline of a keyboard onto a surface upon which the refillable container is placed.

Preferably, the packaged tobacco product storage system means comprises a control system coupled to the climate control means and the consumer interface, the control system being operable to receive information concerning humidity conditions or humidity and temperature conditions within the storage compartment from the climate control means and to display the information on the visual means of the consumer interface.

Where the packaged tobacco product storage system comprises a drive unit for automatically opening the storage compartment of the refillable container, the control system is preferably coupled to the drive unit. The computer control system is preferably operable to display a message on the visual means of the consumer interface upon operation of the drive unit to open the storage compartment of the refillable container.

Where the consumer interface comprises audio-visual means for communication with a consumer, the computer control system is preferably operable to emit an audible indication to a consumer from the audio-visual means of the consumer interface upon operation of the drive unit to open the storage compartment of the refillable container.

Where the drive unit is operable to automatically close the storage compartment, the computer control system may also be operable to display a message, emit an audible indication or to display a message and emit an audible indication to a consumer from the audio-visual means of the consumer interface upon operation of the drive unit to close the storage compartment of the refillable container.

Where the drive unit is not operable to automatically close the storage compartment, the computer control system is preferably operable to display a reminder on the visual means of the consumer interface for the consumer to close the storage compartment of the refillable container. Preferably, the computer control system is operable to display the reminder in response to the storage being left open for a pre-set length of time.

Where the consumer interface comprises audio-visual means for communication with a consumer, the computer control system may be operable to emit an audible reminder to a consumer from the audio-visual means of the consumer interface to close the storage compartment of the refillable container.

Preferably, the computer control system is operable to: receive via the input means of the consumer interface a consumer order for packaged tobacco products for retention in the storage compartment of the refillable container of the packaged tobacco product storage system and; transmit the consumer order to a supplier at a location remote from the packaged tobacco product storage system.

More preferably, the control system is operable to wirelessly transmit the consumer order to a supplier at a location remote from the packaged tobacco product storage system. To enable wireless communication between the computer control system and the supplier, the computer control system may, for example, comprise a wireless local area network (WLAN) antenna mounted in the refillable container. Alternatively, the control system may comprise a blue tooth device to enable wireless communication with the supplier.

The computer control system may comprise means for storing a pre-programmed set of orders for packaged tobacco products for selection by a consumer via the input means of the consumer interface. For example, the consumer interface may comprise an interactive touch screen and the computer control system may be operable to display a number of pre-programmed orders for different quantities of packaged tobacco products on the touch screen of the consumer interface for selection by a consumer.

As described further below, the computer control system preferably comprises means for storing details of at least one previous order for packaged tobacco products placed by a consumer and for calculating a proposed order for selection by a consumer via the input means of the consumer interface based on the stored details of the at least one previous order.

The refillable container of the packaged tobacco product storage system of the present invention may be at least partially formed from transparent material to enable a consumer to see packaged tobacco products retained within the storage compartment. For example, the refillable container may be provided with one or more transparent windows through which the interior of the storage compartment is visible. In embodiments of the present invention, the refillable container of the packaged tobacco product storage system may include a transparent portion that permits a consumer to take a visual inventory of packaged tobacco products retained in the storage compartment.

Alternatively, or in addition, packaged tobacco product storage systems according to the present invention may further comprise inventory taking means comprising one or more sensors mounted in the storage compartment of the refillable container that are operable to provide information concerning the number of packaged tobacco products retained in the storage compartment. For example, where the storage compartment is divided by one or more partitions into at least two sections, each for retaining a separate array of packaged tobacco products, each section may be provided with one or more known optical sensors operable to detect the number of packaged tobacco products in the separate array of packaged tobacco products retained therein. Alternatively, each section may be provided with one or more known mechanical sensors, for example one or more known weight sensors, operable to detect the number of packaged tobacco products in the separate array of packaged tobacco products retained therein.

Preferably, the packaged tobacco product storage system further comprises automatic identification and data capture (AIDC) means operable to maintain an inventory of packaged tobacco products retained in the storage compartment. Packaged tobacco product storage system according to the invention may comprise any suitable known automatic identification and data capture means. The automatic identification and data capture means may, for example, comprise one or more optical scanners for reading barcodes (e.g. Universal Product Codes (UPC) or European Article Number (EAN) codes) provided on packaged tobacco products retained in the storage compartment. Alternatively or in addition, the automatic identification and data capture means may comprise one or more Radio Frequency Identification (RFID) transceivers for reading RFID tags provided on packaged tobacco products retained in the storage compartment.

Preferably, the packaged tobacco product storage system comprises a computer control system coupled to the automatic identification and data capture or other inventory taking means, the computer control system being operable to receive inventory information from the automatic identification and data capture or other inventory taking means and to display the inventory information on the visual means of the consumer interface.

Preferably, the computer control system is operable to display a prompt on the visual means of the consumer interface upon receipt of pre-determined inventory information from the automatic identification and data capture or other inventory taking means. For example, upon receipt of information from the automatic identification and data capture means that the total quantity of packaged tobacco products retained in the storage compartment of the refillable container has fallen below a pre-determined level, the computer control system may be operable to display a prompt to order further packaged tobacco products on the visual means of the consumer interface. Alternatively or in addition, the computer control system may be operable to display a prompt to order further packaged tobacco products on the visual means of the consumer interface upon receipt of information from the automatic identification and data capture or other inventory taking means that the quantity of packaged tobacco products in an array of packaged tobacco products retained in the storage compartment of the refillable container has fallen below a pre-determined level.

In a particularly preferred embodiment of the invention, the computer control system is operable to calculate a proposed order for packaged tobacco products and to display the proposed order on the visual means of the consumer interface. Preferably, the computer control system is operable to calculate the proposed order based on inventory information received from the automatic identification and data capture means or other inventory taking means. Preferably, the computer control system is operable to store details of at least one previous order for packaged tobacco products and to calculate the proposed order based on the stored details of the at least one previous order.

In yet further embodiments of the invention, the computer control system may be operable to calculate prescribed humidity conditions to be maintained within the storage compartment based on inventory information received from the automatic identification and data capture means and to transmit the prescribed humidity conditions to the climate control means. Alternatively or in addition, the computer control system may be operable to, for example, display messages on the visual or audio-visual means of the consumer interface, to emit audible indications from the audio-visual means of the consumer interface, to adjust, restrict or limit the operation of the access control means or the climate control means or any combination thereof based on inventory information received from the automatic identification and data capture means.

Packaged tobacco product storage systems according to the present invention may be mains or line powered, be battery powered or a combination thereof.

The exterior of the refillable container of packaged tobacco product storage systems according to the present invention may be printed, embossed or debossed with, for example, manufacturer and brand logos, trade marks, slogans, operating instructions and other consumer information and indicia.

According to the present invention there is also provided a method of distributing packaged tobacco products directly to a consumer comprising: receiving an order for packaged tobacco products from a packaged tobacco storage system according to any preceding claim at a non-retail location; and supplying packaged tobacco products to a consumer at the non-retail location for storage in the packaged tobacco storage system.

The invention will now be further described, by way of example only, with reference to the following drawings in which:

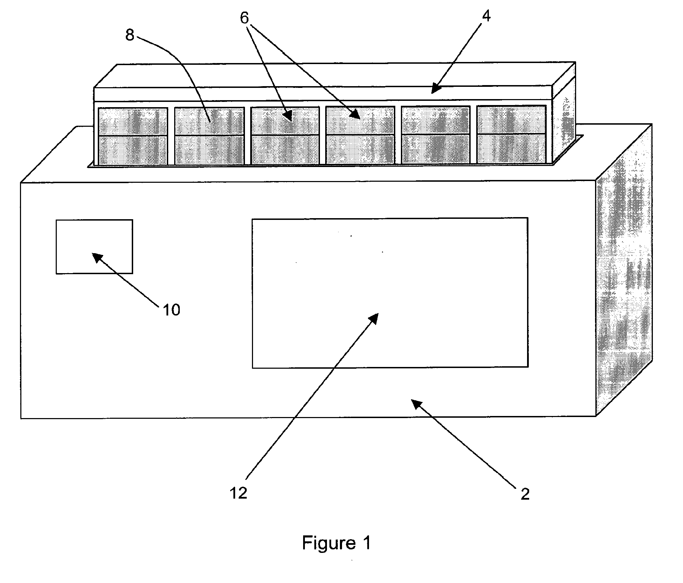

Figure 1 is a schematic drawing of a personal packaged tobacco product storage system according to an embodiment of the invention.

The personal packaged tobacco product storage system shown in Figure 1 comprises a generally cuboid refillable container 2 comprising a storage compartment 4 having a top wall, an opposed bottom wall and a pair of opposed side walls. If desired, the storage compartment 4 may further comprise a complete or partial rear wall. The storage compartment 4 is mounted within a cavity provided in the refillable container 2 for movement between an open position, in which an upper portion of the storage compartment 4 projects outwardly from the cavity through an opening in the top wall of the refillable container 2 (as shown in Figure 1) and a closed position (not shown) in which the storage compartment is within the cavity and the top wall of the storage compartment 4 is level with the top wall of the refillable container 2. Mechanical drive means (not shown) is mounted in the refillable container 2 for moving the storage compartment 4 from the closed position to the open position. An o-ring or other seal (not shown) is provided around the rim of the opening in the top wall of the refillable container 2.

The personal packaged tobacco product storage system further comprises climate control means (not shown) including a chemically controlled humidity regulator mounted in the refillable container 4 for maintaining a relative humidity of about 60% within the cavity provided in the refillable container 2, and hence the storage compartment 4 in the closed position. For example, the refillable container 2 may comprise a compartment comprising a mixture of polypropylene glycol and distilled water in communication with the storage compartment 4.

As shown in Figure 1, the storage compartment 4 is divided by partitions (not shown) into six sections, each section being capable of retaining a separate vertically stacked column 6 of between six and eight wrapped bundles 8 of cigarettes for use as refills or cartridges for cigarette cases and other cigarette dispensers. The vertically stacked wrapped bundles 8 of cigarettes in each column 6 are biased by springs (not shown) mounted at the base of each column 6.

A fingerprint scanner 10 for preventing unauthorised access to wrapped bundles 8 of cigarettes stored in the storage compartment 4 is mounted on the exterior of the refillable container 2. A RFID transceiver for reading RFID tags provided on the wrapped bundles 8 of cigarettes stored in the storage compartment 4 is also mounted in the refillable container 2.

The personal packaged tobacco product storage system also includes a consumer interface comprising an audio-visual touchscreen display panel 12 mounted on the front wall of the refillable container 2 and a laser keyboard projection device (not shown) mounted on the refillable container 2. The refillable container 2 is further provided with a computer control system (not shown), which regulates and transforms incoming power to the refillable container 2 to the appropriate levels required by the power and logic components thereof. The computer control system comprises a WLAN antenna and is coupled to the climate control means, mechanical drive means, fingerprint scanner 10, audio-visual touchscreen display panel 12, laser projection keyboard device and RFID transceiver.

In use, to access wrapped bundles 8 of cigarettes retained in the storage compartment 4, a consumer places their finger on the fingerprint scanner 10. The consumer's fingerprint is read by the fingerprint scanner 10 and compared to the fingerprint of one or more authorised users of the personal packaged tobacco product storage system whose fingerprints are stored by the computer control system. If the consumer's fingerprint matches the fingerprint of an authorised user, the mechanical drive means is actuated by the control system to slowly raise the storage compartment 4 from the closed position to the open position shown in Figure 1 in order to allow access to the two uppermost wrapped bundles 8 of cigarettes in each of the six columns 6 of wrapped bundles 8 of cigarettes retained therein. The computer control system also actuates the audio-visual touchscreen display panel 12 to play a tune or other audible indication of the opening of the storage compartment 4 by the mechanical drive means and to display a welcome message. The welcome message may include, for example, one or more of the current date, the current time, the date on which the consumer last accessed the personal packaged tobacco product storage system date and the time at which the consumer last accessed the personal packaged tobacco product storage system date. The welcome message may also be personalised by the inclusion of information, such as, for example, the consumer's first name, which may be stored with the consumer's fingerprint in the computer control system.

Once the storage compartment 4 reaches the open position, or after the welcome screen has been displayed for a pre-set length of time, the audio-visual touchscreen display panel 12 displays the humidity conditions maintained within the cavity by the climate control means, details of which are received from the climate control means and transmitted to the consumer interface by the computer control system.

Once the humidity conditions at which wrapped bundles 8 of cigarettes in the storage compartment 4 have been stored have been displayed for a pre-set length of time, the audio-visual touchscreen display panel 12 displays an inventory of the wrapped bundles 8 of cigarettes stored in the storage compartment 4 that are available for removal by the consumer. The inventory may be displayed verbally, numerically or graphically on the audio-visual touchscreen display panel 12. For example, the inventory may be displayed in the form of a bar chart. The RFID transceiver provided in the refillable container 2 reads RFID tags provided on the wrapped bundles 8 of cigarettes stored in the storage compartment 4 and transmits the information to the computer control system, which then calculates and transmits an inventory to the consumer interface for display on the audio-visual touchscreen display panel 12.

The consumer then removes their desired selection of wrapped bundles 8 of cigarettes from the storage compartment 4 of the packaged tobacco product storage system. If the removal of a wrapped bundle 8 of cigarettes from the storage compartment 4 by the consumer results in the remaining quantity of that type of wrapped bundle 8 of cigarettes retained in the storage compartment 4 falling below a pre-determined level, as detected by the RFID transceiver, the computer control system triggers the consumer interface to display a message on the touchscreen display panel 12 informing the consumer and inviting them to order additional stock of that type of wrapped bundle 8 of cigarettes. Where the inventory is displayed as a bar chart, the touchscreen display panel 12 may, for example, show the height of the bar representing that type of wrapped bundle 8 of cigarettes decreasing, together with a question asking the consumer whether they wish to place an order for further wrapped bundles 8 of cigarettes.

If the consumer indicates that they wish to place an order, for example, by pressing a "YES" button displayed on the touchscreen display panel 12, the computer control system calculates a proposed order based on at least one of inventory information received from the RFID transceiver and at least one previous order placed by the consumer, details of which may be stored by the consumer control system, and transmits the proposed order to the consumer interface for display on the touchscreen display panel 12.

If the consumer indicates that they wish to place the proposed order calculated by the computer control system by, for example, pressing a "YES" button displayed on the touchscreen display panel 12, the computer control system wirelessly transmits the proposed order to a supplier at a remote location via the WLAN antenna.

If, having indicated that they wish to place an order, the consumer indicates that they do not wish to place the proposed order calculated by the computer control system, by, for example, pressing a "NO" button displayed on the touchscreen display panel 12, the computer control system actuates the laser keyboard projection device to project a keyboard onto the table top, desk top or other surface on which the refillable container 2 is stood. The consumer interface displays a message on the touchscreen display panel 12 asking the consumer to enter details of the order for further wrapped bundles 8 of cigarettes they wish to place. The message displayed on the touchscreen display panel 12 may also include terms and conditions associated with the ordering process. Once the consumer has entered all the required details of the order they wish to place, the computer control system wirelessly transmits the consumer's order to the supplier via the WLAN antenna.

Before transmitting the proposed order or the consumer's order to the supplier, the computer control system may trigger the touchscreen display 12 of the consumer interface to display additional messages summarising details of the order, asking the consumer to confirm the order, asking the consumer to enter or confirm payment details or a delivery address or any combination thereof.

After transmitting the order to the supplier, the computer control system triggers the consumer interface to display a message on the touchscreen display panel 12 advising the consumer that the order has been placed. The message displayed on the touchscreen display panel 12 may also include delivery information, such as an estimated delivery date, and details of whom the consumer should contact if they have any queries concerning the order.

Once the ordering process has been completed, the consumer interface displays a message on the touchscreen display panel 12 reminding the consumer to move the storage compartment 4 from the open position shown in Figure 1 to the closed position within the cavity in the refillable container 2 in order to seal the storage compartment 4 and so maintain the freshness of the remaining wrapped bundles 8 of cigarettes stored therein. Following movement of the storage compartment 4 from the open position to the closed position by the consumer, the consumer interface displays a farewell message on the touchscreen display panel 12 before a screensaver is activated by the computer control system. If after a pre-set length of time the consumer has not moved the storage compartment 4 from the open position shown in Figure 1 to the closed position within the cavity in the refillable container 2, the computer control system actuates the audio-visual touchscreen display panel 12 to play an audible indication alarm reminding them to do so.

It will be appreciated that the information displayed on the touchscreen of the consumer interface and the order in which such information is displayed in the above description of the personal packaged tobacco product storage system according to the embodiment of the invention shown in Figure 1 is for the purposes of illustration only and that packaged tobacco product storage systems according to the invention may comprise computer control systems and consumer interfaces adapted to display and receive other information from a consumer.

The packaged tobacco product storage system of the present invention advantageously enables an individual consumer to store a personal preferred selection of packaged tobacco products under optimal conditions, thereby preserving the flavour and freshness of their preferred selection of packaged tobacco products prior to use. Furthermore, by enabling an individual consumer to store a tailored or customised selection of packaged tobacco products under optimal conditions, the packaged tobacco product storage system of the present invention gives the consumer the flexibility to choose the packaged tobacco product that best matches their personal preference at any given time or in any given situation.

## Claims

1. A packaged tobacco product storage system comprising:
a refillable container (2) having a storage compartment (4) for retaining at least two separate arrays (6) of packaged tobacco products (8), the storage compartment (4) being openable to allow access to at least one packaged tobacco product (8) in each of the at least two arrays (6) and closable to prevent access to the at least two arrays (6) of packaged tobacco products (8); and
climate control means operable to maintain prescribed humidity conditions within the storage compartment (4).

2. A packaged tobacco product storage system according to claim 1 wherein the storage compartment (4) is divided by one or more movable partitions into at least two adjustable sections, each for retaining a separate array (6) of packaged tobacco products (8).

3. A packaged tobacco product storage system according to claim 1 or 2 wherein the storage compartment (4) is mounted in the refillable container (2) for movement between a closed position within the refillable container (2) and an open position in which at least a portion of the storage compartment (4) projects outwardly from the remainder of the refillable container (2).

4. A packaged tobacco product storage system according to claim 1, 2 or 3 further comprising access control means (10) for preventing unauthorised access to packaged tobacco products (8) retained in the storage compartment (4).

5. A packaged tobacco product storage system according to any of claims 1 to 4 further comprising:
a consumer interface comprising audio-visual means (12) for communication with a consumer.

6. A packaged tobacco product storage system according to claim 5, wherein the consumer interface further comprises input means for receiving data from a consumer.

7. A packaged tobacco product storage system according to claim 5 or 6 further comprising a control system coupled to the climate control means and the consumer interface, the control system being operable to receive information concerning humidity conditions within the storage compartment (4) from the climate control means and to display the information on the audio-visual means (12) of the consumer interface.

8. A packaged tobacco product storage system according to any preceding claim further comprising an automatic identification and data capture means operable to maintain an inventory of packaged tobacco products (8) retained in the storage compartment (4).

9. A packaged tobacco product storage system according to claims 7 and 8 wherein the control system is coupled to the automatic identification and data capture means, the control system being operable to receive inventory information from the automatic identification and data capture means and to display the information on the audio-visual means (12) of the consumer interface.

10. A packaged tobacco product storage system according to claim 9 wherein the control system is operable to display a prompt on the audio-visual means (12) of the consumer interface upon receipt of pre-determined inventory information from the automatic identification and data capture means.

11. A packaged tobacco product storage system according to claim 10 wherein the control system is operable to calculate a proposed order for packaged tobacco products (8) and to display the proposed order on the audio-visual means (12) of the consumer interface.

12. A packaged tobacco product storage system according to any of claims 7 to 11 wherein the control system is operable to:
receive a consumer order for packaged tobacco products (8) for retention in the storage compartment (4) of the refillable container (2) via the input means of the consumer interface; and
transmit the consumer order to a supplier at a location remote from the packaged tobacco product storage system.

13. A method of distributing packaged tobacco products (8) directly to a consumer comprising:
receiving an order for packaged tobacco products (8) from a packaged tobacco storage system according to any preceding claim at a non-retail location; and
supplying packaged tobacco products (8) to a consumer at the non-retail location for storage in the packaged tobacco storage system.
